# EUROPEAN PATENT APPLICATION

(11) **EP 4 503 567 A1**
(43) Date of publication of application: **05.02.2025**
(21) Application number: 23856638.4
(22) Date of filing: 22.08.2023
(51) Int. Cl.: H04L 51/04

(54) **METHOD AND APPARATUS FOR PRESENTING SESSION MESSAGE, AND DEVICE AND STORAGE MEDIUM**

(30) Priority: 23.08.2022 CN 202211017172
(71) Applicant: Beijing Zitiao Network Technology Co., Ltd., Beijing 100190 (CN)
(72) Inventor: HE, Siqi, Beijing 100028 (CN)
(74) Representative: Dentons UK and Middle East LLP
(86) International application number: PCT/CN2023/114334
(87) International publication number: WO 2024/041549

(57) **Abstract**

According to embodiments of the disclosure, a method, an apparatus, a device and storage medium for presenting a chat message are provided. The method includes: providing a widget associated with a target chat, the widget presenting at least description information about the target chat; and in response to receiving at least one message in the target chat, presenting a visual representation of the at least one message by the widget, a representation type of the visual representation being determined based on a message type of the at least one message.

## Description

This application claims priority to Chinese Patent Application No. 202211017172.0, filed on August 23, 2022 and entitled "METHOD, APPARATUS, DEVICE AND STORAGE MEDIUM FOR PRESENTING A CHAT MESSAGE", the entirety of which is incorporated herein by reference.

### FIELD

Example embodiments of the present disclosure generally relate to the field of computers, and in particular, to a method, an apparatus, a device, and a computer-readable storage medium for presenting a chat message.

### BACKGROUND

With the development of computer technology, more and more people rely on the internet for daily communication. Instant messaging has become one of the major internet services commonly used by people. Some specialized instant messaging applications can provide users with specialized instant messaging services, and some other platforms, such as video platforms, music platforms, etc., are often integrated with corresponding instant messaging functions.

### SUMMARY

**In** a first aspect of the present disclosure, a method for presenting a chat message is provided. The method comprises: providing a widget associated with a target chat, the widget presenting at least description information about the target chat; and in response to receiving at least one message in the target chat, presenting a visual representation of the at least one message by the widget, a representation type of the visual representation being determined based on a message type of the at least one message.

**In** a second aspect of the present disclosure, an apparatus for presenting a chat message is provided. The apparatus comprises: a providing module configured to provide a widget associated with a target chat, the widget presenting at least description information about the target chat; and a presentation module configured to, in response to receiving at least one message in the target chat, present a visual representation of the at least one message by the widget, where a representation type of the visual representation being determined based on a message type of the at least one message.

**In** a third aspect of the present disclosure, an electronic device is provided. The electronic device comprises: at least one processing unit; and at least one memory, coupled to the at least one processing unit and storing instructions executed by the at least one processing unit, the instructions, when executed by the at least one processing unit, causing the electronic device to perform the method of the first aspect.

**In** a fourth aspect of the present disclosure, a computer-readable storage medium is provided. The medium stores a computer program thereon, the computer program, when executed by a processor, implementing the method of the first aspect.

**It** should be understood that what is described in this summary is not intended to identify key features or essential features of the embodiments of the present disclosure, nor is it intended to limit the scope of the present disclosure. Other features disclosed herein will become easily understandable through the following description.

### BRIEF DESCRIPTION OF THE DRAWINGS

The above and other features, advantages, and aspects of respective embodiments of the present disclosure will become more apparent from the following detailed description with reference to the accompanying drawings. The same or similar reference numerals represent the same or similar elements throughout the figures, where:
FIG. 1 illustrates a schematic diagram of an example environment in which the embodiments of the present disclosure can be implemented;
FIGs. 2A to 2C illustrate schematic diagrams of example widgets according to some embodiments of the present disclosure;
FIG. 3 illustrates a schematic diagram of an example chat interface according to some embodiments of the present disclosure;
FIGs. 4A to 4C illustrate schematic diagrams of example widgets according to some embodiments of the present disclosure;
FIG. 5 illustrates a schematic diagram of an example chat interface according to some embodiments of the present disclosure;
FIG. 6A and FIG. 6B show schematic diagrams of example widgets according to some embodiments of the present disclosure;
FIGS. 7A and 7B illustrate schematic diagrams of example chat interfaces according to some embodiments of the present disclosure;
FIG. 8 illustrates a schematic diagram of an example viewfinder state of a widget according to some embodiments of the present disclosure;
FIG. 9 illustrates a schematic diagram of an example chat interface according to some embodiments of the present disclosure;
FIG. 10A and FIG. 10B show schematic diagrams of example widgets according to some embodiments of the present disclosure;
FIG. 11 illustrates a schematic diagram of an example chat interface according to some embodiments of the present disclosure;
FIG. 12A and FIG. 12B show schematic diagrams of example widgets according to some embodiments of the present disclosure;
FIGs. 13A to 13C illustrate schematic diagrams of switching different messages according to some embodiments of the present disclosure;
FIGs. 14A to 14C illustrate schematic diagrams of switching different chats according to some embodiments of the present disclosure;
FIG. 15 illustrates a schematic diagram of presenting a chat aggregation interface according to some embodiments of the present disclosure;
FIG. 16 shows a flowchart of an example process of presenting a chat message according to some embodiments of the present disclosure;
FIG. 17 shows a block diagram of an apparatus for presenting a chat message according to some embodiments of the present disclosure; and
FIG. 18 illustrates a block diagram of a device capable of implementing a plurality of embodiments of the present disclosure.

### DETAILED DESCRIPTION

The embodiments of the present disclosure will be described in more detail with reference to the accompanying drawings. Although some embodiments of the present disclosure are shown in the accompanying drawings, it should be understood that the present disclosure can be implemented in various manners, and thus should not be construed as limited to embodiments elaborated herein, on the contrary, these embodiments are provided for a more thorough and complete understanding of the present disclosure. It should be understood that the accompanying drawings and attachments disclosed herein are for illustrative purposes only and are not intended to limit the scope of protection of this disclosure.

As used herein, the term "including" and its variants are read as open-ended terms that mean "including, but is not limited to." The term "based on" is to be read as "based at least in part on." The term "one embodiment" or "the embodiment" is to be read as "at least one embodiment." The term "some embodiments" is to be read as "at least some embodiments." Other definitions, explicit and implicit, might be further included below.

As discussed above, people often need to enter an instant messaging chat interface to obtain new messages when using instant messaging services. Some instant messaging may also prompt the user through a pop-up window that a new message is received. However, such message presentation methods are limited and inefficient, making it difficult for people to efficiently obtain newly received messages in an instant messaging chat.

However, such a pop-up reminder is generally inefficient. On one hand, such a pop-up reminder may not be effective to provide a preview of a newly received message, e.g., for a picture type message, such a pop-up reminder may generally only prompt the user that a picture message is received. On the other hand, the organization of such a reminder of unread messages is inefficient, and it is difficult for people to accurately obtain new messages from a chat (e.g., a specific friend) they focus on.

Embodiments of the present disclosure provide a solution for presenting a chat message. According to the solution, a widget associated with a target chat may be provided, and the widget may at least present description information about the target chat.

Further, when a new message in the target chat is received, a visual representation of at least one message may be presented using the widget, where a representation type of the visual representation is determined based on a message type of the at least one message.

Thus, the embodiments of the present disclosure can efficiently present messages in a specific chat of interest to a user by the form of a widget, and can provide a wider range of types of visual presentations as a preview of the message

Various example implementations of the solution will be described in detail below in conjunction with the accompanying drawings.

### Example Environment

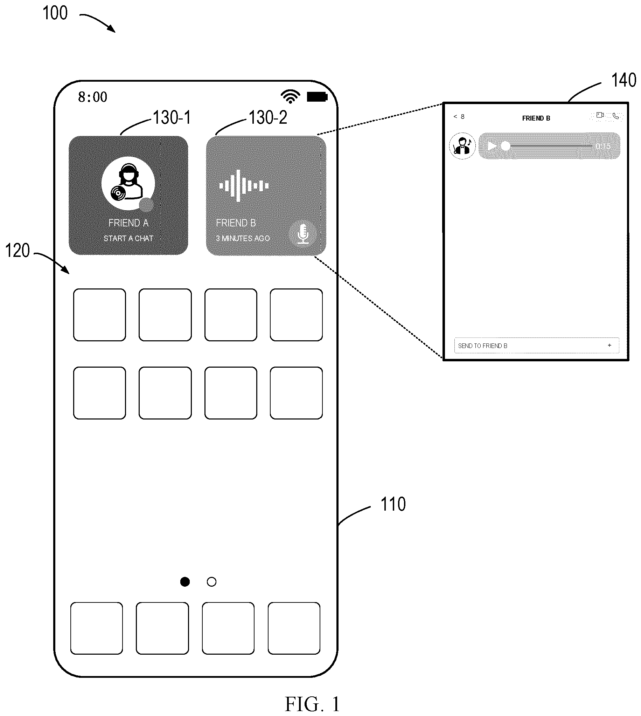

Reference is first made to FIG. 1, which schematically illustrates a schematic diagram of an example environment 100 in which example implementations according to the present disclosure may be implemented. As shown in FIG. 1, the example environment 100 may include an electronic device 110.

As shown in FIG. 1, the electronic device 110 may be, for example, an intelligent terminal (for example, a smart phone), which can provide a graphical interface 120 as shown in FIG. 1. The interface 120 may be, for example, a desktop interface of the intelligent terminal.

**In** some embodiments, the electronic device 110 may be loaded with an instant messaging application or other applications capable of providing instant messaging services, which are collectively referred to as target applications hereinafter. Such a target application can provide the user with instant messaging services with other users or groups.

In the target application, the user may, for example, create one or more chats, each of which may, for example, correspond to a chat with a different user and/or group. For example, a chat may correspond to a one-on-one chat with a particular friend, or a chat may also correspond to a group chat with a plurality of friends.

**In** some embodiments, as shown in FIG. 1, the electronic device 110 may further provide widgets 130-1 and 130-2 (individually or collectively referred to as widgets 130) corresponding to the chat in the target application. The widget is various types of plug-ins or components provided on a particular page (e.g., system desktop).

**In** some embodiments, the user may create the widget 130 through an operating system entry of the electronic device 110. For example, the user may enter a widget configuration interface for adding a widget by long-pressing the system desktop.

As an example, in the widget configuration interface, the user may view widgets supported by various system applications and/or user applications of the electronic device 110. Further, the electronic device 110 may receive, via the widget configuration interface, a user request for creating a widget, and may, for example, add the widget corresponding to the target application to the system desktop.

**In** some embodiments, the widget configuration interface may, for example, provide a chat selection entry for the user to configure a chat associated with the current widget.

**In** some embodiments, the user may also create the widget 130 through a chat interface of the target application. For example, as shown in FIG. 1, a chat interface of the target application is, for example, a chat interface 140 with "friend B". The user may, for example, request to create a widget corresponding to the chat through the chat interface 140, and the target application automatically adds the widget 130-2 corresponding to the chat to the system desktop, for example.

As shown in FIG. 1, the widget 130 may have a substantially square shape, for example. Alternatively, it may have any other suitable layout, such as a rectangle, circle, oval, etc. In some embodiments, one or more of the layout position, size, and shape of the widget 130 may be configured by the user, for example.

For example, the target application may provide a widget style corresponding to a different size and/or shape, which may be selected by the user and move to any appropriate location in the system desktop.

**In** some embodiments, the shape and size of the widget 130 may be, for example, unchangeable by the user, which may be, for example, a specific area always fixed in the negative one screen of the system.

As will be described in detail below, such a widget 130 can be used to present messages received in a chat.

It should be understood that although the electronic device 110 in FIG. 1 is shown as a smart phone, it may also be any other suitable device, including but not limited to: a tablet computer, a notebook computer, a desktop computer, a personal digital assistant, a smart wearable device, an on-board device, or the like.

Various example implementations for implementing message presentation using a widget are described in detail below.

### Example Style of Widgets

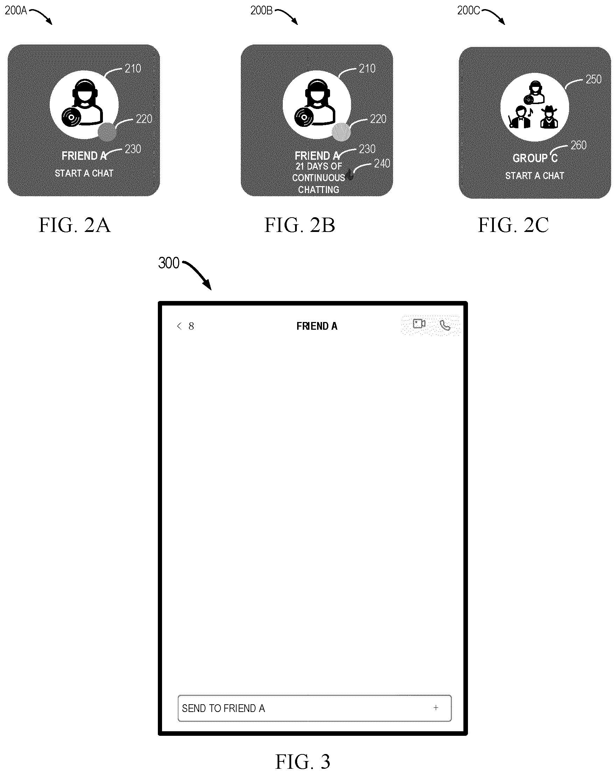

Example styles of widgets according to embodiments of the present disclosure will be described first with reference to FIGs. 2A to 2C.

FIG. 2A illustrates an example widget 200A according to an embodiment of the present disclosure. As shown in FIG. 2A, the widget 200A may include, for example, description information of a chat (e.g., a one-on-one chat with "friend A") associated with the widget 200A.

Such description information may include, for example, an identifier of a participant of the chat, for example, a profile picture 210 of "friend A" and an identifier 230 (a nickname an /or a remark) of "friend A". In the example of FIG. 2A, the widget 200A is a one-on-one chat associated with the same "friend A". Therefore, the identifier 230 may also be understood as an identifier of the one-on-one chat.

Furthermore, the widget 200A may also present a status identifier 220 of a participant, which may represent, for example, whether the participant is currently in an online state by a different color. For example, green may indicate that the participant is currently in an online state, and gray may indicate that the participant is currently in an offline state.

Furthermore, as shown in FIG. 2A, the widget 200A may further include text that guides the user to enter the chat.

In another example, FIG. 2B illustrates an example widget 200B according to an embodiment of the present disclosure. As shown in FIG. 2B, the widget 200B may include, for example, description information of a chat (e.g., a one-on-one chat with "friend A") associated with the widget 200B.

In addition to the profile picture 210, the status identifier 220, and the identity identifier 230 discussed with reference to FIG. 2A, the widget 200B may also present a persistent state 240 of the chat, e.g., "21 days of continuous chats" to indicate that the chat is in a long-term active state.

In another example, FIG. 2C illustrates an example widget 200C according to an embodiment of the present disclosure. As shown in FIG. 2C, the widget 200C may include, for example, description information of a chat (e.g., a group chat with "group C") associated with the widget 200C.

As shown in FIG. 2C, widget 200C may present identifiers of a plurality of participants in the group chat of "group C", such as profile pictures 250. Furthermore, the widget 200C may also provide an identifier 260 of the group chat.

In some embodiments, the widgets 200A, 200B, and 200C may receive a selection operation. For example, after the user clicks the widget 200A, the widget 200B, and the widget 200C, the electronic device 110 may present a corresponding chat interface.

For example, if the user clicks the widget 200A as shown in FIG. 2A, the electronic device 110 may present a chat interface of the target application, for example, an interface 300 shown in FIG. 3.

**In** the interface 300, the user may communicate with "friend A" via an instant messaging service provided by the target application.

### Widget-Based Message Presentation

Description will be given to the presentation of different types of messages in an instant messaging chat by a widget. In some embodiments, when a new message is received in a chat corresponding to the widget, the widget may accordingly provide a visual representation of the message.

**It** should be understood that the widget may be actively refreshed by the running target application. Or, when the target application is in a disabled state, for example, the widget may also be refreshed via a separate interface.

### Presentation of text symbol messages

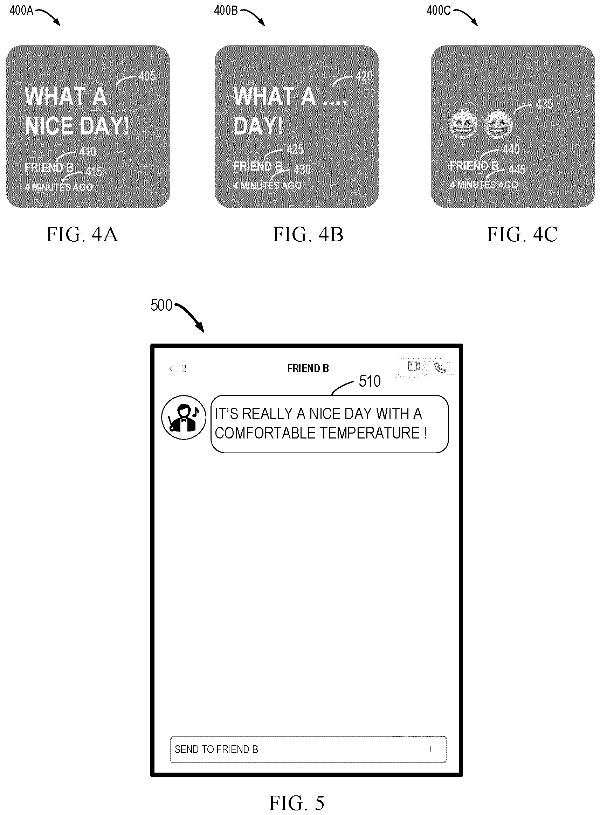

Widgets for presenting a text symbol message according to embodiments of the present disclosure will be described first with reference to FIGs. 4A to 4C. The text symbol message refers to a message composed of one or more characters and/or symbols. Such symbols may include, for example, kaomoji, emoji, and the like.

FIG. 4A illustrates an example widget 400A according to an embodiment of the present disclosure. As shown in FIG. 4A, the widget 400A may present a visual representation 405 of a received new text symbol message.

Specifically, if the length of the text symbol message is less than a threshold length such that the widget 400A can be completely presented, the widget 400A can present the entire content of the text symbol message as its corresponding visual representation.

In addition, the widget 400A may also present an identifier 410 of a sender of the message and a sending and/or receiving time 415 of the message.

In some embodiments, if the length of the text symbol message reaches the threshold length, the widget may only present a part of the content of the text symbol message as its visual representation.

For example, FIG. 4B shows another widget 400B according to an embodiment of the present disclosure. In the case that the length of the received text symbol message reaches the threshold length, the widget 400B may only present a part of the content 420 of the text symbol content as its visual representation. The content that it is not presented may be replaced by an ellipsis, for example.

Furthermore, the widget 400B may similarly present an identifier 425 of the sender of the message and a sending and/or receiving time 430 of the message.

FIG. 4C further illustrates another widget 400C according to an embodiment of the present disclosure. As shown in FIG. 4C, when receiving a text symbol message composed of an emoticon, the widget 400B may correspondingly render the emoji as its visual representation 435, although the emoji may be transmitted as an emoji code in the actual message.

Similarly, the widget 400B may similarly present an identifier 440 of the sender of the message and a sending and/or receiving time 445 of the message.

In some embodiments, when the user selects the visual representation in the widget, the electronic device 110 may accordingly present a chat interface of the target chat, where the chat interface is configured to present the received at least one message

For example, for the widget 400B shown in FIG. 4B, the incomplete content of the message is presented as its visual representation. When the user clicks on the visual representation or other position in the widget, the electronic device 110 may, for example, present a chat interface 500 as shown in FIG. 5. In an interface 500B, the electronic device 110 may present full content 510 of the message as shown in FIG. 5.

In this way, the embodiments of the present disclosure can conveniently and efficiently provide the preview of the text symbol message in the specific chat through the widget, and thus improving the efficiency of obtaining the text symbol message by the user.

### Presentation of image messages

In some embodiments, the electronic device 110 may also provide a visual representation of an image message through a widget. The image message includes a message including visual image content, for example, a picture and/or a video message in the chat.

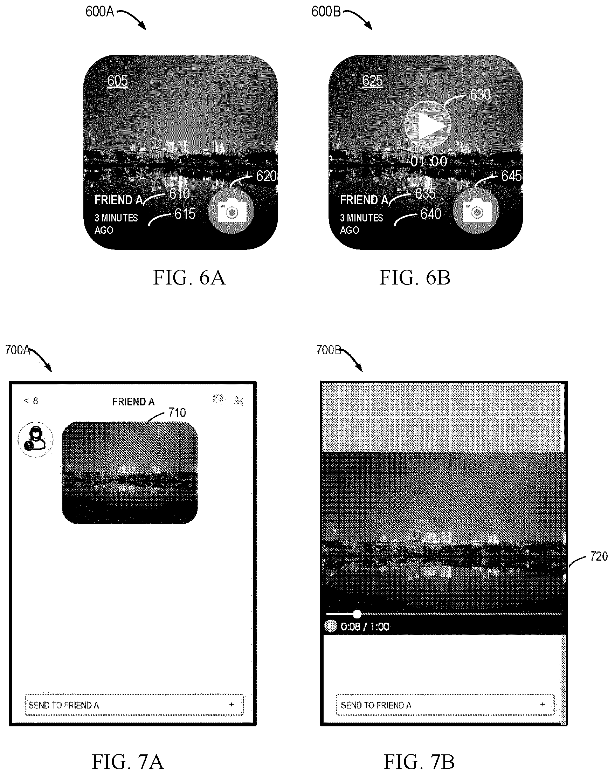

FIG. 6A illustrates an example widget 600A according to an embodiment of the present disclosure. As shown in FIG. 6A, the widget 600A may present a visual representation 605 of the received new picture message. For example, the electronic device 110 may directly fill the picture in the picture message as the background of the widget 600A as a visual representation 605 of the picture message. The pictures in such picture messages may include, for example, still pictures and/or dynamic pictures.

In addition, the widget 600A may similarly present an identifier 610 of the sender of the voice message and a sending and/or receiving time 615 of the voice message

Furthermore, the widget 1000A may also include, for example, a quick reply entry for replying to the voice message, such as a picture or video reply entry 620. The user may, for example, select the picture or video reply entry 620 to activate an image acquisition device of the electronic device 110 to acquire a reply picture or reply video. Further, the reply picture or reply video may be automatically sent to the target chat, e.g., as a reply to the received picture message.

As another example, FIG. 6B illustrates an example widget 600B according to an embodiment of the present disclosure. As shown in FIG. 6B, the widget 600A may present a visual representation 625 of the received new video message. For example, the electronic device 110 may directly fill a particular frame in the video message as a background of the widget 600B as a visual representation 625 of the video message. In some embodiments, the specific frame may be, for example, a start frame, a cover frame, or any other designated frame of the video message.

In addition, the widget 600B may also provide length information about the video. In some embodiments, when the user views the widget 600B for the first time, the widget 600B may, for example, play a part or all of the content of the video message in the widget window in a mute state. Alternatively, the user may trigger mute or non-mute playback of the message in the widget, for example, by clicking a play button 630 in the widget.

In addition, the widget 600B may similarly present an identifier 635 of the sender of the voice message and a sending and/or receiving time 640 of the voice message Furthermore, the widget 1000A may also include, for example, a quick reply entry for replying to the voice message, such as a picture or video reply entry 645. The user may, for example, select the picture or video reply entrance 645 to activate an image acquisition device of the electronic device 110 to acquire a reply picture or reply video. Further, the reply picture or reply video may be automatically sent to the target chat, e.g., as a reply to the received video message, for example.

The trigger logic of the widget 600A and the widget 600B will be described first with reference to FIGs. 7A and 7B. For example, when the user selects, for example, the visual representation 605 in the widget 600A, or clicks other locations in the widget 600A than the reply entry 620, the electronic device 110 may present a chat interface 700A to present a picture message 710.

In some embodiments, when the user selects, for example, the visual representation 605 in the widget 600A, or clicks on other locations in the widget 600A than the reply entry 620, the picture message 710 may be presented in the interface 700A in full screen mode, for example.

As another example, the electronic device 110 may present a chat interface 700B to present a video message 720 when the user, for example, selects the visual representation 625 in the widget 600B, or clicks on other locations in the widget 600B than the play button 630 and the reply entry 645.

In some embodiments, the video message 720 may be presented in a chat interface of the target chat in full screen mode, for example, and automatically played. Alternatively, the video message may be presented in a non-full-screen mode in the chat interface of the target chat and automatically muted or started in response to user selection.

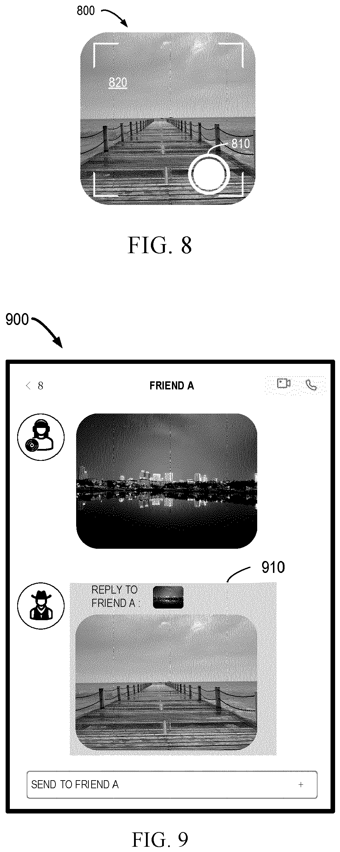

In addition, when the user selects the reply entry 620 in the widget 600A or the reply entry 645 in the widget 600B, for example, the electronic device 110 may convert the widget 600A or the widget 600B to a viewfinder state as shown in FIG. 8.

As shown in FIG. 8, in the viewfinder state, a widget 800 can acquire an image or a video by an image capturing device (for example, a front camera or a rear camera) of the electronic device 110. In addition, the reply entry 620 or reply entry 645 in the widget may be automatically converted to a style of a viewfinder 810 for controlling the shooting, pausing, or stopping of the image or video.

Further, after the user completes recording of the reply picture or the reply video by the widget 800 in the viewfinder state, the electronic device 110 may cause the reply picture or the reply video to be automatically sent to the target chat.

For example, as shown in FIG. 9, in a chat interface 900, the electronic device 110 may send a reply picture 910 to the chat as a reply to the received picture. In addition, in the chat interface 900, the reply picture 910 may also be automatically marked with the text "Reply to friend A" as a reply to the received particular picture message, for example.

**In** this way, the embodiments of the present disclosure can utilize a widget to quickly provide a preview on a picture/video message, and can also support a fast reply to the picture/video message, thereby improving efficiency of message obtaining and interaction.

### Presentation of specific types of messages, such as voice

In some embodiments, the electronic device 110 may also provide a visual representation of a particular type of message in the chat, such as an audio message, through a widget. Such a specific type of message may include, for example, a voice message, a red packet message, a location message, a conference message, an invitation message, a hyperlink message, or the like.

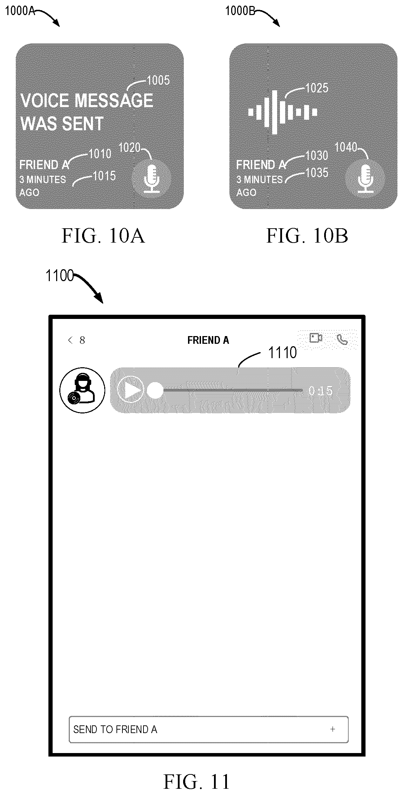

FIG. 10A illustrates an example widget 1000A according to an embodiment of the present disclosure. As shown in FIG. 10A, the widget 1000A may present a visual representation 1005 of the received new voice message in a textual manner. In addition, the widget 1000A may similarly present an identifier 1010 of the sender of the voice message and a sending and/or receiving time 1015 of the voice message

Furthermore, the widget 1000A may also include, for example, a quick reply entry for replying to the voice message, such as a voice reply entry 1020. For example, the user may select the voice reply entry 1020 to activate a voice acquisition device of the electronic device 110 to acquire a reply audio. Further, the reply audio may be automatically sent to the target chat, e.g., as a reply to the received voice message

FIG. 10B illustrates an example widget 1000B according to some more embodiments of the present disclosure. As shown in FIG. 10B, the widget 1000B may also graphically present a visual representation 1025 of the received new voice message. For example, the widget 1000B may indicate that a voice message is received in the chat by a graphical representation of the audio waveform.

Furthermore, like the widget 1000A, the widget 1000B may also similarly present an identifier 1030 presenting the sender of the voice message and a sending and/or receiving time 1035 of the voice message. In addition, the widget 1000B may also provide a voice reply entry 1040 for a quick reply audio.

In some embodiments, when the user clicks the visual representation 1005 or 1025 in the widget 1000A and/or 1000B, for example, or the user clicks on other portion of the widget 1000A and/or 1000B than the voice reply entry 1020 or 1040, the electronic device 110 may, for example, present a chat interface 1100 as shown in FIG. 11. As shown in FIG. 11, in the interface 1100B, the electronic device 110 may present a voice message 1110.

In some embodiments, upon receiving a user selection of the visual representation 1005 or 1025, the electronic device 110 may present the chat interface 1100 and cause the voice message 1110 to be played automatically.

Although the presentation of a particular type of message is discussed above with reference to a voice message, it should be understood that other specific types of messages, such as red packet messages, location messages, conference messages, file messages, invitation messages, or hyperlink messages, etc., may also be presented by similar mechanisms.

For example, for the red packet message received in the chat, the electronic device 110 may present a pattern of the red packet or provide a text representation in the widget, for example, "A red packet has been sent".

For example, for a location message received in a chat, the electronic device 110 may present a graphical location representation in the form of a map in the widget or provide a textual representation, such as "A location has ben sent".

For example, for a conference message received in a chat, the electronic device 110 may present a graphical symbol of the conference in the widget or provide a textual representation, such as "conference information has been sent".

For example, for a conference message received in a chat, the electronic device 110 may present a graphical symbol of the file in the widget (e.g., presented based on a format of the file) or provide a textual representation, such as "A file has been sent".

For example, for an invitation message (for example, a group invitation) received in a chat, the electronic device 110 may present a graphic symbol (e.g., a profile picture of a group to be invited) in the widget corresponding to the invitation message or provide a textual representation, for example, "A group invitation has been sent".

For example, for a hyperlink message received in a chat, the electronic device 110 may present the quick preview content of the link in the widget or provide a textual representation, such as "A hyperlink has been sent".

In some embodiments, like the voice message described above, for other specific types of messages described above, the electronic device 110, for example, supports the user to trigger an associated interaction operation corresponding to the type of the specific type of message by interaction with the corresponding visual representation. For example, the user may directly trigger the operation of opening the red packet by clicking the visual representation of the red packet message, directly trigger the operation of joining the group by clicking the visual representation of the group invitation message, directly trigger the operation of downloading the file by clicking the visual representation of the file message, and so on.

In this way, the embodiments of the present disclosure can conveniently and efficiently provide previews of various types of messages in a specific chat through the widget, thereby improving the efficiency of obtaining the message by the user.

### Other Examples

Various examples of quickly presenting relevant messages by utilizing widgets have been described above with reference to text symbol messages, picture video messages, and other specific types of messages such as voices. Furthermore, examples regarding the image video reply entry and the voice reply entry have been described above in conjunction with picture video messages and voice messages.

It should be understood that the above quick reply entry may also be applied to any other suitable type of message. In some embodiments, the electronic device 110 may further provide an emoji reply entry by a widget, and the emoji reply entry may, for example, provide a set of candidate emojis for selection. The user may, for example, click any candidate emoji to complete the quick emoji reply to the message. For example, the emoji may be sent as a separate message to the chat, or the emoji may be presented as a quick reply to a particular message to be presented in association with the message in the chat interface, e.g., as like for a certain message.

Based on the various examples described above, the embodiments of the present disclosure can determine a representation type (e.g., a textual representation, a graphical representation, or a video representation, etc.) of a visual representation of the message in the widget based on a message type of the message received in the chat (e.g., a textual symbol message, a picture video message, or a voice, etc.).

Additionally, or alternatively, the fill pattern of the background in the widget may be determined based on attributes associated with the target chat. For example, in the case of no message, a text symbol message, or the like in the chat, the fill color of the background of the widget may be determined, for example, based on a profile picture (e.g., profile picture of the friend) of the participant associated with the target chat, or an image identifier of the target chat (e.g., a profile picture of the group chat).

In some embodiments, the fill pattern of the background in the widget may be determined based on attributes associated with the visual representation. For example, where the visual representation includes graphical information, the fill color of the background in the widget may be determined based on the color of the graphical information. For example, if the visual representation includes an emoji, the background of the widget may be filled with a color close to but different from the color of the emoji, thereby forming an overall color display style.

Furthermore, as discussed above with reference to the examples, it can be seen that the display style and/or display position of the description information (e.g., nickname, profile picture, status identifier, etc.) of the target chat in the widget may be determined based on the representation type of the visual representation to be presented. For example, where the image content is presented as a visual representation, the specific content and/or presentation style of the description information being presented may differ from the presentation of the textual symbolic content as a visual representation.

Therefore, the embodiments of the present disclosure can provide a wider range of types of message previews, thereby improving the efficiency of obtaining the message by the user.

### Presentation of Multiple Messages

The above example is mainly described with respect to the case of a single message, and the embodiments of the present disclosure can further utilize a widget to provide a prompt of multiple unread messages.

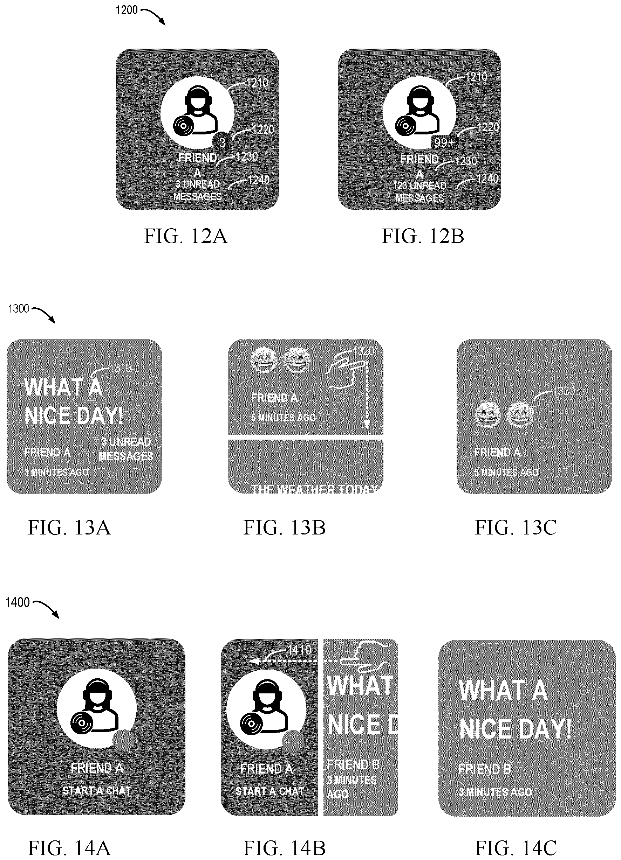

FIG. 12A illustrates an example widget 1200 according to some embodiments of the present disclosure. As shown in FIG. 12A, the widget 1200 may, for example, present a visual representation of a plurality of messages of a chat with "friend A".

In some embodiments, the widget 1200 may aggregate the plurality of messages as prompt information 1240 to indicate that there are currently three unread messages. Furthermore, the widget 1200 may also indicate the number of dimension messages through a numeric identifier 1220. Similarly, the widget 1200 may also present a profile picture 1210 and an identifier 1230 "Friend A."

In some embodiments, as shown in FIG. 12B, when the number of unread messages is greater than a predetermined threshold (e.g., 99), the numeric identifier 1220 may be represented in a predetermined style, such as "99 +".

In some embodiments, in addition to presenting the prompt information for indicating the number of unread messages, the widget may further present a visual representation of one of the unread messages. For example, FIG. 13A illustrates an example widget 1300 according to some embodiments of the present disclosure.

As shown in FIG. 13A, in addition to the prompt information about the number of unread messages, the widget 1300 also provides a visual representation 1310 of one of the unread messages (e.g., the latest unread message).

Further, as shown in FIG. 13B, when a downward swiping operation 1320 on the widget 1300 is received, the widget 1300 may be switched to displaying a visual representation 1330 of another unread message as shown in FIG. 13C.

In some embodiments, the switching of different messages may be performed accordingly, for example, in response to a triggering operation of a predetermined switching control associated with the widget by the user.

Further, if the user clicks on the visual representation 1330, the electronic device 1100 may present the chat interface of the target chat and may cause the message corresponding to the selected visual representation 1330 to be highlighted or adjusted to the appropriate display position in the chat interface.

In this way, the embodiments of the present disclosure can realize aggregated presentation of a plurality of messages by a widget, and can quickly preview a plurality of unread messages through appropriate swiping interaction, thereby improving the message interaction efficiency.

### Handover of Chat

In some embodiments, a single widget may also be configured to be associated with a plurality of chats, for example. In some embodiments, in the configuration state of the widget, the user can configure a single widget to be associated with a plurality of different chats and can configure the presentation priority of the plurality of chats.

For example, the configured widget always presents the message of the first chat of the first priority in the initial state of the system desktop, and may switch to displaying the message of the second chat of the second priority by swiping.

FIG. 14A illustrates an example widget 1400 according to an implementation of the present disclosure. As shown in FIG. 14A, in the current state, the widget 1400 may, for example, be used to present a related message of the first chat with "friend A". Correspondingly, the widget 1400 may present description information about the first chat, for example, a chat representation or a participant identifier of the first chat.

Further, as shown in FIG. 14B, after receiving a left swiping operation 1410 on the widget 1400, the widget 1400 may switch to displaying the related message of the second chat with "friend B" as shown in FIG. 14C. Correspondingly, the widget 1400 may present description information about the second chat, for example, a chat representation or a participant identifier of the second chat.

**In** some embodiments, the switching of different chats may be performed accordingly, for example, in response to a triggering operation of the user on a predetermined switching control associated with the widget.

**In** some embodiments, the display priorities of different chats in the widget may also change dynamically. For example, when a chat receives a new unread message, its display priority may be increased and may always be switched to be presented directly in the widget without switching. Alternatively, the display priorities of different chats in the widget may also be based on the number of unread messages.

**In** this way, the embodiments of the present disclosure can also support the aggregation of related messages of a plurality of chats with a single widget, thereby improving the efficiency of message presentation and acquisition.

### Provision of visualization component

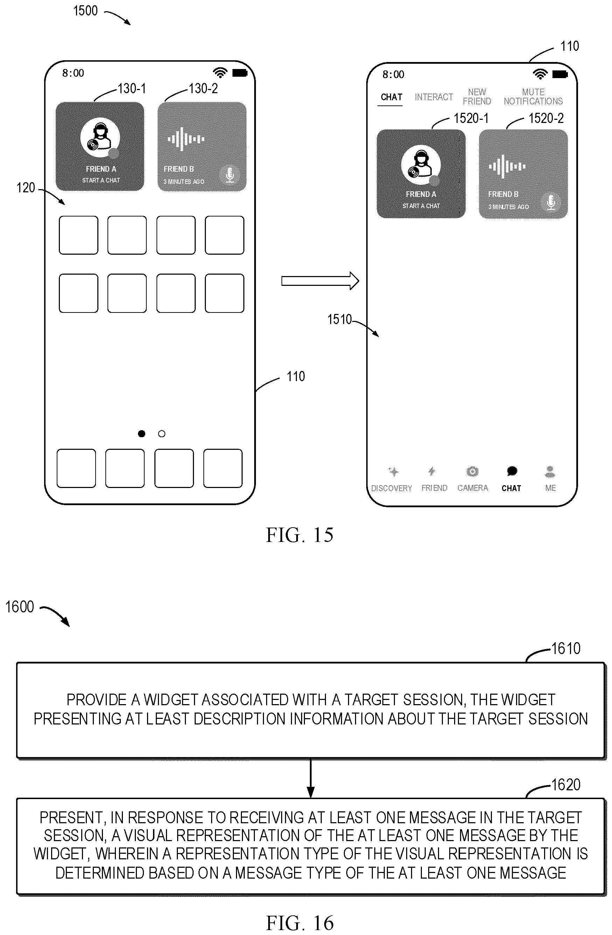

**In** some embodiments, the electronic device 110 may further present, in the chat aggregation interface, a visualization component corresponding to the chat. FIG. 15 shows a schematic diagram 1500 of presenting a chat aggregation interface according to some embodiments of the present disclosure.

As shown in FIG. 15, the electronic device 110 may also present, in a chat aggregation interface 1510, visualization components 1520-1 and 1520-2 (individually or collectively referred to as visualization components 1320) corresponding to chats in the target application. For example, such visualization components may include card components, tile components, and the like. In some embodiments, such visualization components may be independently editable, e.g., created, moved, deleted, etc.

**In** some embodiments, as shown in FIG. 15, the content presented in the visualization component 1520 may correspond to the content presented in the widget 130. For example, the visualization component 1520 may have a shape similar to the widget 130, whose size may be, for example, be scaled accordingly to fit the display in the chat aggregation interface 1510.

**In** addition, the content presented in the visualization component 1520 can be updated with the widget 130, for example. In some embodiments, the visualization component 1520 may be updated independently of each other from the widget 130, but always maintains a corresponding display content. Alternatively, the update of the content in the visualization component 1520 and the widget 130 may always depend on the other party. For example, an update of the visualization component 1520 may be used to trigger the corresponding widget 130 to be updated accordingly.

In some embodiments, the visualization component 1520 may have the same interaction logic as the corresponding widget 130. For example, selection of the visualization component 1520 may also trigger the electronic device 110 to present a chat interface corresponding to the target chat. Other interaction mechanisms may refer to the content described above with respect to the widget 130, and details are not repeated herein.

In this way, the embodiments of the present disclosure can further use one or more visualization components in the chat aggregation interface to conveniently provide a visual representation of the message received in the chat, thereby facilitating the user to more quickly and intuitively obtain the message content in the chat.

### Example Process

FIG. 16 illustrates a flowchart of an example process 1600 for presenting a chat message according to some embodiments of the present disclosure. The process 1600 may be implemented by the electronic device 110 of FIG. 1 independently, or by a combination of the electronic device 110 and other computing devices. For ease of discussion, the process 1600 will be described in conjunction with FIG. 1.

As shown in FIG. 16, at block 1610, the electronic device 110 provides a widget associated with a target chat, the widget presenting at least description information about the target chat.

At block 1620, in response to receiving at least one message in the target chat, the electronic device 110 presents a visual representation of the at least one message by the widget, a representation type of the visual representation being determined based on a message type of the at least one message.

In some embodiments, the method further includes: in response to receiving a first predetermined operation for the widget, presenting a chat interface of the target chat, where the chat interface is configured to present the received at least one message.

In some embodiments, the first predetermined operation includes a selection for the visual representation.

In some embodiments, the method further includes: stopping presenting the visual representation of the at least one message in the widget in response to the chat interface of the target chat being presented.

In some embodiments, the description information of the target chat includes at least one of: a chat identifier of the target chat; a participant identifier of at least one participant of the target chat; and a state identifier of at least one participant of the target chat, to indicate whether the at least one participant is in an online state, where the chat identifier, the participant identifier, or the state identifier includes a text identifier and/or a graphic identifier.

In some embodiments, the at least one message includes an image content message, and presenting the visual representation of the at least one message by the widget includes: filling at least a part of the background of the widget with a picture associated with the image content message as a visual representation of the image content message.

In some embodiments, the image content message includes a picture message, and presenting the visual representation of the at least one message by the widget includes: filling at least a part of the background of the widget with a picture in the picture message as a visual representation of the picture message.

In some embodiments, the image content message includes a video message, and presenting the visual representation of the at least one message by the widget includes: filling at least a part of the background of the widget with a target frame of a video in the video message as a visual representation of the video message.

In some embodiments, the method further includes: in response to the selection for the visual representation, causing the video in the video message to be played in a chat interface of the target chat.

In some embodiments, the at least one message includes a specific type of message, and the specific type of message includes at least one of: a voice message, a red packet message, a location message, a conference message, a file message, an invitation message, a call request message, and a hyperlink message, where the visual representation supports an associated interaction operation corresponding to a type of the specific type of message.

**In** some embodiments, presenting the visual representation of the at least one message by the widget includes: presenting, by the widget, a graphical representation corresponding to the specific type of message as a visual representation of the specific type of message.

**In** some embodiments, the widget further includes a quick reply entry configured for generating a reply message for the at least one message based on the widget.

**In** some embodiments, the quick reply entry includes a voice reply entry, and the method further includes: in response to a selection of the voice reply entry, obtaining a reply audio by an audio acquisition device; and sending the reply audio as a reply message to the target chat.

In some embodiments, the quick reply entry includes an emoji reply entry, the emoji reply entry including a set of candidate emojis, and the method further includes: in response to a selection of a target emoji in the set of candidate emojis, sending the target emoji as a reply message to the target chat.

In some embodiments, the quick reply entry includes a picture or a video reply entry, and the method further includes: in response to a selection of the picture or the video reply entry, converting the widget into a viewfinder state for obtaining an image or a video by an image capture device; and sending the picture or the video obtained based on the widget as a reply message to the target chat.

In some embodiments, the reply message is marked as a reply to the at least one message in the chat interface of the target chat.

In some embodiments, the method further includes: in response to a second predetermined operation on the widget, switching the widget to presenting description information of other chat different than the target chat.

In some embodiments, the second predetermined operation includes a first swiping operation or a triggering operation on a first predetermined switching control associated with the widget.

In some embodiments, the at least one message comprises a plurality of messages, wherein presenting the visual representation of the at least one message by the widget comprises: presenting, by the widget, a first visual representation of a first message of the plurality of messages, and in response to a third predetermined operation on the widget, switching the widget to a second visual representation of a second message of the plurality of messages.

In some embodiments, the third predetermined operation includes a second swiping operation or a triggering operation on a second predetermined switching control associated with the widget.

In some embodiments, a representation type of the visual representation includes at least one of a text representation, a graphical representation, and a video representation.

In some embodiments, the widget is built in response to a widget creation request received in the chat interface of the target chat or in a system desktop of an operating system.

In some embodiments, the method further includes: presenting, in the chat aggregation interface, a card type component corresponding to the target chat, where the card type component presents content corresponding to the widget.

In some embodiments, a presentation location and/or presentation style of the description information is determined based on the representation type of the visual representation.

In some embodiments, a background fill style of the widget is determined based on a first attribute associated with the target chat and/or a second attribute associated with the visual representation.

### Example Apparatus and Device

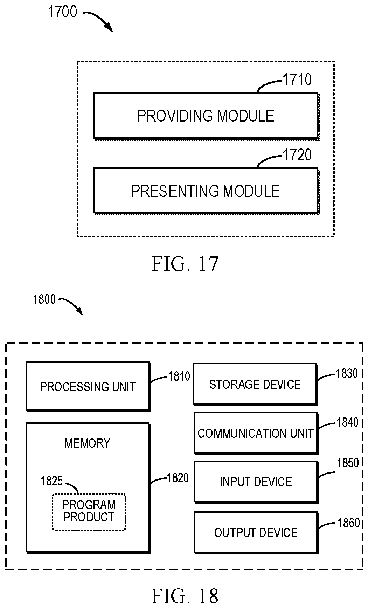

The embodiments of the present disclosure further provide a corresponding apparatus for implementing the above method or process. FIG. 17 is a schematic structural block diagram of an apparatus 1700 for presenting a chat message according to some embodiments of the present disclosure.

As shown in FIG. 17, the apparatus 1700 includes a providing module 1710 configured for providing a widget associated with a target chat, the widget presenting at least description information about the target chat.

Furthermore, the apparatus 1700 further includes a presentation module 1720 configured for presenting, in response to receiving at least one message in the target chat, a visual representation of the at least one message by the widget, where a representation type of the visual representation is determined based on a message type of the at least one message.

In some embodiments, the presentation module 1720 is further configured for: in response to receiving a first predetermined operation for the widget, presenting a chat interface of the target chat, where the chat interface is configured to present the received at least one message.

In some embodiments, the first predetermined operation includes a selection for the visual representation.

In some embodiments, the presentation module 1720 is further configured for: stopping presenting the visual representation of the at least one message in the widget in response to the chat interface of the target chat being presented.

In some embodiments, the description information of the target chat includes at least one of: a chat identifier of the target chat; a participant identifier of at least one participant of the target chat; and a state identifier of at least one participant of the target chat, to indicate whether the at least one participant is in an online state, where the chat identifier, the participant identifier, or the state identifier includes a text identifier and/or a graphic identifier.

In some embodiments, the at least one message includes an image content message, and the presentation module 1720 is further configured for: filling at least a part of the background of the widget with a picture associated with the image content message as a visual representation of the image content message.

In some embodiments, the image content message includes a picture message, and the presentation module 1720 is further configured for: filling at least a part of the background of the widget with a picture in the picture message as a visual representation of the picture message.

In some embodiments, the image content message includes a video message, and the presentation module 1702 is further configured for: filling at least a part of the background of the widget with a target frame of a video in the video message as a visual representation of the video message.

In some embodiments, the presentation module 1720 is further configured for: in response to the selection for the visual representation, causing the video in the video message to be played in a chat interface of the target chat.

**In** some embodiments, the at least one message includes a specific type of message, and the specific type of message includes at least one of: a voice message, a red packet message, a location message, a conference message, a file message, an invitation message, a call request message, and a hyperlink message, where the visual representation supports an associated interaction operation corresponding to a type of the specific type of message.

**In** some embodiments, the presentation module 1720 is further configured for: presenting, by the widget, a graphical representation corresponding to the specific type of message as a visual representation of the specific type of message.

In some embodiments, the widget further includes a quick reply entry configured for generating a reply message for the at least one message based on the widget.

In some embodiments, the quick reply entry includes a voice reply entry, and the presentation module 1720 is further configured for: in response to a selection of the voice reply entry, obtaining a reply audio by an audio acquisition device; and sending the reply audio as a reply message to the target chat.

In some embodiments, the quick reply entry includes an emoji reply entry, the emoji reply entry including a set of candidate emojis, and the presentation module 1720 is further configured for: in response to a selection of a target emoji in the set of candidate emojis, sending the target emoji as a reply message to the target chat.

In some embodiments, the quick reply entry includes a picture or a video reply entry, and the presentation module 1720 is further configured for: in response to a selection of the picture or the video reply entry, converting the widget into a viewfinder state for obtaining an image or a video by an image capture device; and sending the picture or the video obtained based on the widget as a reply message to the target chat.

In some embodiments, the reply message is marked as a reply to the at least one message in the chat interface of the target chat.

In some embodiments, the presentation module 1720 is further configured for: in response to a second predetermined operation on the widget, switching the widget to presenting description information of other chat different than the target chat.

In some embodiments, the second predetermined operation includes a first swiping operation or a triggering operation on a first predetermined switching control associated with the widget.

In some embodiments, the at least one message comprises a plurality of messages, wherein the presentation module 1720 is further configured for: presenting, by the widget, a first visual representation of a first message of the plurality of messages, and in response to a third predetermined operation on the widget, switching the widget to a second visual representation of a second message of the plurality of messages.

In some embodiments, the third predetermined operation includes a second swiping operation or a triggering operation on a second predetermined switching control associated with the widget.

In some embodiments, a representation type of the visual representation includes at least one of a text representation, a graphical representation, and a video representation.

In some embodiments, the widget is built in response to a widget creation request received in the chat interface of the target chat or in a system desktop of an operating system.

In some embodiments, the presentation module 1720 is further configured for: presenting, in the chat aggregation interface, a card type component corresponding to the target chat, where the card type component presents content corresponding to the widget.

In some embodiments, a presentation location and/or presentation style of the description information is determined based on the representation type of the visual representation.

In some embodiments, a background fill style of the widget is determined based on a first attribute associated with the target chat and/or a second attribute associated with the visual representation.

The units included in the apparatus 1700 may be implemented in various manners, including software, hardware, firmware, or any combination thereof. In some embodiments, one or more units may be implemented using software and/or firmware, such as machine-executable instructions stored on a storage medium. In addition to or as an alternative to machine-executable instructions, some or all of the units in the apparatus 1700 may be implemented, at least in part, by one or more hardware logic components. By way of example and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

FIG. 18 illustrates a block diagram of a computing device/server 1800 in which one or more embodiments of the present disclosure may be implemented. It should be understood that the computing device/server 1800 shown in FIG. 18 is only exemplary and shall not constitute any limitation on the functions and scopes of the embodiments described herein

As shown in FIG. 18, the computing device/server 1800 is in the form of a general purpose computing device. Components of the computing device/server 1800 may include, but are not limited to, one or more processors or processing units 1810, a memory 1820, a storage device 1830, one or more communication units 1840, one or more input devices 1850, and one or more output devices 1860. The processing unit 1810 may be a physical or virtual processor and may execute various processing based on the programs stored in the memory 1820. In a multi-processor system, a plurality of processing units executes computer-executable instructions in parallel to enhance parallel processing capability of the computing device/server 1800.

The computing device/server 1800 usually includes a plurality of computer storage mediums. Such mediums may be any attainable medium accessible by the computing device/server 1800, including but not limited to, a volatile and non-volatile medium, a removable and non-removable medium. The memory 1820 may be a volatile memory (e.g., a register, a cache, a Random Access Memory (RAM)), a non-volatile memory (such as, a Read-Only Memory (ROM), an Electrically Erasable Programmable Read-Only Memory (EEPROM), flash), or any combination thereof. The storage device 1830 may be a removable or non-removable medium, and may include a machine-readable medium (e.g., a memory, a flash drive, a magnetic disk) or any other medium, which may be used for storing information and/or data (e.g., training data for training) and be accessed within the computing device/server 1800.

The computing device/server 1800 may further include additional removable/non-removable, volatile/non-volatile storage mediums. Although not shown in FIG. 18, there may be provided a disk drive for reading from or writing into a removable and non-volatile disk (e.g., "floppy disk") and an optical disc drive for reading from or writing into a removable and non-volatile optical disc. In such cases, each drive may be connected to a bus (not shown) via one or more data medium interfaces. The memory 1820 may include a computer program product 1825 having one or more program modules, and these program modules are configured for performing various methods or acts of various implementations of the present disclosure.

The communication unit 1840 implements communication with another computing device via a communication medium. In addition, functions of components of the computing device/server 1800 may be realized by a single computing cluster or a plurality of computing machines, and these computing machines may communicate through communication connections. Therefore, the computing device/server 1800 may operate in a networked environment using a logic connection to one or more other servers, a Personal Computer (PC) or a further general network node.

The input device 1850 may be one or more various input devices, such as a mouse, a keyboard, a trackball, a voice-input device, and the like. The output device 1860 may be one or more output devices, e.g., a display, a loudspeaker, a printer, and so on. The computing device/server 1800 may also communicate through the communication unit 1840 with one or more external devices (not shown) as required, where the external device, e.g., a storage device, a display device, and so on, communicates with one or more devices that enable users to interact with the computing device/server 1800, or with any device (such as a network card, a modem, and the like) that enable the computing device/server 1800 to communicate with one or more other computing devices. Such communication may be executed via an Input/Output (I/O) interface (not shown).

According to the example implementations of the present disclosure, a computer-readable storage medium is provided, on which one or more computer instructions are stored, wherein the one or more computer instructions are executed by a processor to implement the method described above.

Aspects of the present disclosure are described herein with reference to flowchart illustrations and/or block diagrams of methods, apparatus (systems), and computer program products according to implementations of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods and computer program products according to various implementations of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various implementations of the present disclosure have been presented for purposes of illustration, but are not intended to be exhaustive or limited to implementations disclosed. Many modifications and variations will be apparent to those of ordinary skill in the art without departing from the scope and spirit of the described implementations. The terminology used herein was chosen to best explain the principles of implementations, the practical application or technical improvement over technologies found in the marketplace, or to enable others of ordinary skill in the art to understand implementations disclosed herein.

## Claims

1. A method for presenting a chat message, comprising:
providing a widget associated with a target chat, the widget presenting at least description information about the target chat; and
in response to receiving at least one message in the target chat, presenting a visual representation of the at least one message by the widget, a representation type of the visual representation being determined based on a message type of the at least one message.

2. The method of claim 1, further comprising:
in response to receiving a first predetermined operation for the widget, presenting a chat interface of the target chat, the chat interface being configured to present the received at least one message

3. The method of claim 2, wherein the first predetermined operation comprises a selection of the visual representation.

4. The method of claim 2 or 3, further comprising:
in response to the chat interface of the target chat being presented, stopping presenting the visual representation of the at least one message in the widget.

5. The method of claim 1, wherein the description information of the target chat comprises at least one of the following:
a chat identifier of the target chat;
a participant identifier of at least one participant of the target chat; and
a state identifier of at least one participant of the target chat indicative of whether the at least one participant is in an online state;
wherein the chat representation, the participant identifier, or the state identifier comprises a text identifier and/or a graphic identifier.

6. The method of claim 1, wherein the at least one message comprises an image content message, and the presenting the visual representation of the at least one message by the widget comprises:
filling at least a part of a background of the widget with a picture associated with the image content message as the visual representation of the image content message.

7. The method of claim 6, wherein the image content message comprises a picture message, and presenting the visual representation of the at least one message by the widget comprises:
filling at least a part of the background of the widget with a picture in the picture message as the visual representation of the picture message.

8. The method of claim 6, wherein the image content message comprises a video message, and presenting the visual representation of the at least one message by the widget comprises:
filling at least a part of the background of the widget with a target frame of a video in the video message as the visual representation of the video message.

9. The method of claim 8, further comprising:
in response to a selection of the visual representation, causing the video in the video message to be played in a chat interface of the target chat.

10. The method of claim 1, wherein the at least one message comprises a specific type of message, and the specific type of message comprises at least one of: a voice message, a red packet message, a location message, a conference message, a file message, an invitation message, a call request message, and a hyperlink message, wherein the visual representation supports an associated interaction operation corresponding to a type of the specific type of message.

11. The method of claim 10, wherein the presenting the visual representation of the at least one message by the widget comprises: presenting, by the widget, a graphical representation corresponding to the specific type of message as a visual representation of the specific type of message.

12. The method of claim 1, wherein the widget further comprises a quick reply entry configured to generate a reply message for the at least one message based on the widget.

13. The method of claim 12, wherein the quick reply entry comprises a voice reply entry, and the method further comprises:
in response to a selection of the voice reply entry, obtaining a reply audio by an audio acquisition device; and
sending the reply audio as the reply message to the target chat.

14. The method of claim 12, wherein the quick reply entry comprises an emoji reply entry, the emoji reply entry comprises a set of candidate emojis, and the method further comprises:
in response to a selection of a target emoji in the set of candidate emojis, sending the target emoji as the reply message to the target chat.

15. The method of claim 12, wherein the quick reply entry comprises a picture or a video reply entry, and the method further comprises:
in response to a selection of the picture or video reply entry, converting the widget into a viewfinder state for obtaining an image or a video by an image capture device; and
sending the picture or the video obtained based on the widget as the reply message to the target chat.

16. The method of claim 12, wherein the reply message is marked as a reply to the at least one message in a chat interface of the target chat.

17. The method of claim 1, further comprising:
in response to a second predetermined operation for the widget, switching the widget to present description information of a further chat different from the target chat.

18. The method of claim 17, wherein the second predetermined operation comprises a first swiping operation or a triggering operation for a first predetermined switching control associated with the widget.

19. The method of claim 1, wherein the at least one message comprises a plurality of messages, and wherein presenting the visual representation of the at least one message by the widget comprises:
presenting, by the widget, a first visual representation of a first message of the plurality of messages, and
in response to a third predetermined operation for the widget, switching the widget to present a second visual representation of a second message of the plurality of messages.

20. The method of claim 19, wherein the third predetermined operation comprises a second swiping operation or a triggering operation for a second predetermined switching control associated with the widget.

21. The method of claim 1, wherein the representation type of the visual representation comprises at least one of: a text representation, a graphical representation, and a video representation.

22. The method of claim 1, wherein the widget is built in response to a widget creation request received in a chat interface of the target chat or in a system desktop of an operating system

23. The method of claim 1, further comprising:
presenting, in a chat aggregation interface, a card type component corresponding to the target chat, wherein the card type component presents a content corresponding to the widget.

24. The method of claim 1, wherein a presentation location and/or presentation style of the description information is determined based on the representation type of the visual representation.

25. The method of claim 1, wherein a background fill style of the widget is determined based on a first attribute associated with the target chat and/or a second attribute associated with the visual representation.

26. An apparatus for presenting a chat message, comprising:
a providing module configured to provide a widget associated with a target chat, the widget presenting at least description information about the target chat; and
a presentation module configured to, in response to receiving at least one message in the target chat, present a visual representation of the at least one message by the widget, a representation type of the visual representation being determined based on a message type of the at least one message.

27. An electronic device, comprising:
at least one processing unit; and
at least one memory coupled to the at least one processing unit and storing instructions executed by the at least one processing unit, the instructions, when executed by the at least one processing unit, causing the device to perform the method of any of claims 1 to 25.

28. A computer-readable storage medium having a computer program stored thereon, the computer program, when executed by a processor, implementing the method of any of claims 1 to 25.
